# EUROPEAN PATENT APPLICATION

(11) **EP 4 184 862 A1**
(43) Date of publication of application: **24.05.2023**
(21) Application number: 21209931.1
(22) Date of filing: 23.11.2021
(51) Int. Cl.: H04L 9/40, H04W 12/122, H04L 67/125, H04W 4/40, H04W 4/48, H04W 76/30

(54) **CYBERSECURITY RESPONSE BY A DRIVER OF A VEHICLE**

(71) Applicant: Valeo Comfort and Driving Assistance, 94000 Créteil (FR)
(72) Inventor: MAGDY, Esraa, 94000 Créteil (FR); ELBADRASHINY, Haitham, 94000 Créteil (FR)
(74) Representative: Delaval, Guillaume Laurent

(57) **Abstract**

The disclosure notably relates to a method for cybersecurity response/cyber resiliency by a driver of a vehicle, the vehicle comprising a trigger device accessible to the driver and coupled by wire to an electrical gate of the vehicle. The method comprises, upon a cyberattack on the vehicle, activating the trigger device by the driver, thereby disabling by the electrical gate, vehicle connectivity to outside of the vehicle. The disclosure also relates to a vehicle system for performing said method. These provide new solutions to respond to cyber-attacks in vehicles with increased safety.

## Description

### TECHNICAL FIELD

The disclosure relates to the field of security for a vehicle against cyber-attacks, and more specifically to a method and system for cybersecurity response by a driver of a vehicle.

### BACKGROUND

A connected-car, or more generally a connected-vehicle, offers smart features such as internet connectivity, remote operation of vehicle functions and advanced security features. Such connected-vehicles are now facing increasing threats of cyber-attacks. Once exploited the vehicle's vulnerabilities, a malicious hacker may remotely access and manipulate the functions and/or data of the connected vehicle, which can lead to various risks such as exposure of personal or corporate information, compromised vehicle security mechanisms, or even full control of the vehicle itself.

To protect a vehicle from cyber-attacks, current security defensive solutions are based on diverse software defensive mechanisms, including cryptographic solutions, and some operational constraints, based on system analysis. Example solutions include, for example, but not limited to, authentication of the communicating electronic control units (ECUs), flashing only authentic software, secure booting, and authenticity of the processed messages on the vehicle bus.

However, such existing countermeasures do not reliably work in all situations. There are always some clever techniques that may bypass the applied mechanisms, either because these software defensive mechanisms become outdated by time, or because of some vulnerabilities in the design or in the implementation. In some existing solutions, detection of and response to cyber-attacks may rely on software implementation, which may be also a part of the cyber-attack and may not function as desired. In case such detection/response system based on internal software logic is subject to the cyber-attack and fails to properly work, the driver/passengers would be left helplessly facing off a possible fully controlled vehicle from an external attacker.

Within this context, there is thus a need for safer solutions to respond to cyber-attacks in vehicles, that is, with increased reliability and/or robustness.

### SUMMARY

It is therefore provided a method for cybersecurity response by a driver of a vehicle, the vehicle comprising a trigger device accessible to the driver and coupled by wire to an electrical gate in the vehicle. The method comprises, upon a cyberattack on the vehicle, activating the trigger device by the driver, thereby disabling by the electrical gate, vehicle connectivity to outside of the vehicle.

The method may comprise one or more of the following:
- the vehicle has one or more connectivity interfaces for establishing the vehicle connectivity to outside of the vehicle and disabling the vehicle connectivity comprises shutting down the one or more connectivity interfaces in the vehicle;
- the one or more connectivity interfaces for establishing the vehicle connectivity to outside of the vehicle comprise a Telematics Control Unit (TCU) and/or a TCU connectivity interface and/or an antenna which interface the outside of the vehicle, and disabling the vehicle connectivity comprises cutting off power to the TCU and/or the TCU connectivity interface and/or the antenna;
- the vehicle has an operational network, the cyberattack affects the operation network, and the method further comprises switching, by the electrical gate, the operational network to a backup network of the vehicle, upon activation of the trigger device;
- the trigger device is activated once to disable the vehicle connectivity and to switch the operational network;
- the trigger device is activated twice, first to disable the vehicle connectivity and then to switch the operational network;
- the trigger device comprises a first button configured to be activated to disable the vehicle connectivity, and a second button configured to be activated to switch the operational network;
- the vehicle comprises one or more main Electronic Control Units (ECUs) each for a vehicle control function and one or more backup ECUs each corresponding to the one or more main ECUs, and the cyberattack affects the one or more main ECUs, wherein switching the operational network comprises disabling power to the one or more main ECUs and enabling power to the corresponding one or more backup ECUs;
- the vehicle comprises at least one ECU including a first microcontroller for normal operation and a second microcontroller for safe mode operation, the second microcontroller being connected to the trigger device, wherein switching the operational network comprises putting, by the second microcontroller, the first microcontroller into a permanent hardware reset mode;
- the vehicle comprises at least one ECU including a microcontroller, the microcontroller comprising a safe mode software application and a normal software application, wherein switching the operational network comprises:
   sending by the electric gate a safe mode activation signal to the microcontroller upon activation of the trigger device, and
   switching by the microcontroller from the normal software application to the safe mode software application upon receiving the safe mode activation signal; and/or
- the electrical gate is connected to a power line and supplies power to one or more of the ECUs and TCUs of the vehicle.

It is further provided a vehicle system for cybersecurity response by a driver of a vehicle, the system being configured for performing the method. The system comprises the trigger device and the electrical gate, the trigger device being configured to be coupled by wire to the electrical gate.

The system may comprise one or more of the following:
- the vehicle system further comprises one or more backup ECUs which are one time programmed, configured to take control of one or more operational functions of the vehicle upon activation of the trigger device;
- the trigger device comprises a first button configured to be activated to disable the vehicle connectivity, and a second button configured to be activated to switch an operational network of the vehicle which is affected by the cyberattack to a backup network of the vehicle; and/or
- the trigger device is configured to be installed in a front panel of the vehicle, and/or the system further comprises a shield configured to cover the trigger device.

### BRIEF DESCRIPTION OF THE DRAWINGS

Non-limiting examples will now be described in reference to the accompanying drawings, where:
- FIG. 1 shows a flowchart of an example of the cybersecurity method;
- FIG. 2 shows a flowchart of another example of the cybersecurity method;
- FIG. 3 shows an overview of an example of a vehicle system for performing the cybersecurity method according to FIG.s 1 and 2;
- FIG. 4 shows an overview of another example of a vehicle system for performing the cybersecurity method according to FIG.s 1 and 2; and
- FIG. 5 shows an overview of another example of a vehicle system for performing the cybersecurity method according to FIG.s 1 and 2.

### DETAILED DESCRIPTION

There is proposed a method for cybersecurity response by a driver of a vehicle. The vehicle comprises a trigger device accessible to the driver and coupled by wire to an electrical gate in the vehicle. The method comprises, upon a cyberattack on the vehicle, activating the trigger device by the driver. The electrical gate thereby disables vehicle connectivity to outside of the vehicle.

There is further proposed a vehicle system configured for performing the method. In other words, the vehicle system may be adapted to be installed in a vehicle such that the vehicle is configured for performing the above described method steps. The system comprises the trigger device and the electrical gate. The trigger device is configured to be coupled by wire to the electrical gate.

This offers a hardware/mechanical protection mechanism for a driver to retrieve back control over the cyber-attacked vehicle by himself/herself. Namely, the solution builds on the driver's decision to activate the trigger device once he/she realizes that the vehicle is cyber-attacked. Such defensive layer can save the life of the driver and passengers, even in case the already existing purely software-based defensive mechanisms were bypassed. In examples, the vehicle may further comprise such purely software-based defensive mechanisms, or any other existing countermeasures for cyber security in addition to the trigger device.

The proposed cybersecurity method may thus be a method for cyber resilience to keep the vehicle critical functionalities working even after successful cyber-attacks, the cybersecurity resilience solution may depend on the response of the driver of the attacked vehicle.

The vehicle may be a connected vehicle, namely a vehicle having a connectivity to the outside of the vehicle or communicating with other systems outside of the vehicle. The vehicle may comprise a connectivity or communication interface, for example a telematic control unit (TCU). The vehicle may be a car, thus for example a connected car, or alternatively a passenger vehicle, a commercial vehicle, a truck or a motorcycle.

The trigger device accessible to the driver comprises a trigger device which is physically reachable by the driver while he/she is driving the vehicle. Specifically, the trigger device may comprise a trigger device to which the driver may press or touch to activate it while he/she is seated in the vehicle. The trigger device comprises any hardware or mechanical trigger configured to be reached and activated by the driver of the vehicle. The trigger device may optionally be configured to reduce likeliness of being activated by mistake. For example, the trigger device may comprise one or more buttons located in or installed on a front panel of the vehicle, with optionally at least one (e.g. each) button being covered with open/close shield. Alternatively or additionally, the trigger device may comprise a switch and/or a lever, and/or a device in any other appropriate form.

The trigger device is coupled by wire to the electrical gate, for example by being connected by a wire, a cable, or via any mechanical connecting means with the electrical gate.

The electrical gate may comprise an electrical gate circuit, a control terminal, and/or a switch. The trigger device and the electrical gate may be connected with each other so that the activation of the trigger device "triggers" the electrical gate, or causes the electrical gate to operate.

Once activated, the electrical gate coupled by wire to the trigger device disables the vehicle connectivity to outside of the vehicle (i.e. to the telecommunication network(s) external to the vehicle), for example in milliseconds. Thus, hackers may no longer have access to the vehicle internal network. The proposed solution enables higher security by preventing further attacks to try to send malicious commands or malwares to the vehicle and hijack the vehicle control. The electrical gate may disable all the vehicle external connectivity, i.e. all the vehicle connectivity to the outside of the vehicle.

Later on, the method may comprise the driver reaching a predetermined destination. The predetermined destination may comprise for example a maintenance base or a service station, where the driver can safely stay and/or the vehicle can be safely parked to recover the vehicle system without a risk of further attack. This allows protecting a vehicle even against the cyber-attacks which may bypass the existing software-based security system.

The vehicle may have one or more connectivity interfaces for establishing the vehicle connectivity to outside of the vehicle, i.e. one or more connectivity interfaces for establishing the vehicle external connectivity. Further, disabling the vehicle connectivity may comprise shutting down the one or more connectivity interfaces in the vehicle.

The connectivity interfaces may be configured for any one or any combination (e.g., all) of the following types of communication: Internet, GPS, Wi-Fi, radio communication, mobile connection, and Bluetooth. Once the trigger device is activated, the connectivity interfaces in the vehicle necessary for establishing the vehicle external connectivity are shut down. Thus, further cyber-attacks can be prevented as a hacker can no longer have access to the vehicle internal network.

The one or more connectivity interfaces for establishing the vehicle connectivity to outside of the vehicle may comprise a Telematics Control Unit (TCU) and/or a TCU connectivity interface and/or an antenna which interfaces the outside of the vehicle, and disabling the vehicle connectivity may comprise cutting off power to the TCU and/or the TCU connectivity interface and/or the antenna.

The TCU may be an embedded system fitted in a vehicle for availing telematics services. The TCU may wirelessly connect the vehicle to cloud services or other vehicles, for example. Further, the TCU may collect telemetry data from the vehicle, which may include an element such as position, speed, and engine data, for example.

Cutting off the power to the TCU and/or the TCU connectivity interface and/or the antenna may ensure removing the link with the cyber-attacker. Not only disabling the connectivity, but also cutting off the power and shutting down the TCU and/or the TCU connectivity interface and/or the antenna as such may provide a further reliable and fundamental countermeasure for preventing further attack or manipulation by a hacker.

The other connecting ECUs on the vehicle network may be configured such that cutting off the powerto the interfacing TCU may not cause any otherfailure in the entire vehicle network.

The vehicle may have an operational network. In such a case, the cyberattack may affect the operation network, and the method may further comprise switching, by the electrical gate, the operational network to a backup network/solution of the vehicle, upon activation of the trigger device.

If the cyber-attack has just invaded the vehicle but has failed to introduce any malware or bring any internal malfunction into the vehicle, removing the link with the cyber-attacker by disabling the connectivity as described above may be sufficient for protecting the vehicle. However, in a worse case, for example where the hacker has successfully hijacked the vehicle driving function or brought fault injection into the vehicle operational network, restarting the vehicle back in control from a safe backup network/solution may better ensure the driver/passenger's safety.

The backup network/solution may be one-time programmed (OTP). By "one-time programmed device", it is meant for the device is factory-programmed once and non-(re)programmable. The device may comprise a mechanism to prevent such post-factory programming. Thus, the backup network may be a factory safe replacement network that is non-programmable. Once the backup network is up and running (possibly in milliseconds), the vehicle may be back in control. Now the new running software is safe from further attacks as the connectivity is totally disabled as described above and as the replacement operational network is designed to accept no new software. The driver may re-enable all features back again after arriving at a safe destination as explained above.

The trigger device may be activated once to disable the vehicle connectivity and to switch the operational network.

This allows a simple one-step control to both disable the connectivity and switch the operational network.

The trigger device may be activated twice, first to disable the vehicle connectivity and then to switch the operational network.

This allows a flexible two-steps control subject to the driver's control and depending on the extent of the cyber-attack. The first trigger disables all the vehicle connectivity, and if the attack is still effective, then the second trigger switches the operational network.

The trigger device may comprise a first button configured to be activated to disable the vehicle connectivity, and a second button configured to be activated to switch the operational network.

This allows a simple implementation of the two-steps control of the trigger device.

The trigger device may comprise two separate buttons for the two-steps activation of the trigger device. Alternatively, the trigger device may comprise one button which is configured to be pressed in two stages, for example first to a certain extent then consecutively to a farther extent, a switch configured to be toggled in two states, or a dial configured to be turned in two states, for example. In any case, the trigger device may be configured to be reached and activated by the driver of the vehicle, but not likely to be activated by mistake, as described above.

The vehicle may comprise one or more Electronic Control Units (ECUs) which may be referred to as "main" or "regular" ECUs and are each for a respective vehicle control function (at a time where the trigger device is not activated). The vehicle may further comprise one or more "backup" or "secure" ECUs separate from the one or more main ECUs, each corresponding respectively to the one or more main ECUs. The cyberattack may affect the one or more main ECUs, and switching the operational network may comprise disabling power to the one or more main ECUs and enabling power to the corresponding one or more backup ECUs.

This may provide a fully backup ECUs system with additional links to functionally critical sensors and/or actuators. Once the trigger device is activated, the infected operational network is switched to a safe backup network by disabling the power to all the infected main ECUs, especially the safety or functionally critical main ECUs, and enabling the power to the corresponding backup ECUs. Then the backup ECU may control the electronic circuit in the vehicle and the driver recover the full control of the vehicle.

Each of the one or more main ECUs may be in charge of the braking system control, steering wheel, speed control, and/or any other vehicle control functions, for example. Each of the main ECUs for each vehicle control function may have a corresponding backup ECU for its function. Alternatively, one backup ECU may correspond to a plurality of different vehicle control functions, either belonging to one main ECU or to a plurality of main ECUs. The backup ECUs may be connected to sensors and/or actuators of the vehicle for such necessary vehicle control functions.

The backup ECUs may be one-time programmed (OTP) with a factory safe non-programmable software. In other words, the backup ECUs may not accept any new software or modification, and are thereby robust against further attacks.

The vehicle may comprise at least one ECU including a first microcontroller for normal operation and a second microcontroller for safe mode operation. The second microcontroller may in such a case be connected to the trigger device, and switching the operational network may comprise putting, by the second microcontroller, the first microcontroller into a permanent hardware reset mode.

Once the trigger device is activated, the second microcontroller, which is also one-time programmed, may put the first microcontroller into a permanent hardware reset mode, namely non-functioning mode with Input/Output pins set to Tri-state.

This forms a more compact configuration rather than providing fully backup ECUs system comprising backup ECUs each for substituting the corresponding one of all the ECUs.

The vehicle may comprise at least one ECU including a microcontroller. The microcontroller may comprise a safe mode software application and a normal software application. In this case, switching the operational network comprises: sending by the electric gate a safe mode activation signal to the microcontroller upon activation of the trigger device; and switching by the microcontroller from the normal software application to the safe mode software application upon receiving the safe mode activation signal.

Specifically, the microcontroller of the ECU may comprise a memory area for a normal software application for a normal operation, and an additional memory area designed as one-time programmed and programmed to set the microcontroller operation to a safe mode software application area upon activation of the trigger device. The safe mode software application area may be factory safe one-time programmed.

Whenever the trigger device is activated, a hardware reset signal may force the software on the microcontroller of the ECU to start again. Namely, once the trigger device is activated, the microcontroller is reset to its initial state. Then the microcontroller may restart from the one-time programmed safe mode software application area which is configured to run a failsafe software. The failsafe software forces the microcontroller to perform checking whether the trigger device is activated or not, and/or whether the normal software application area is intact or not. If it is detected that the trigger device is not activated and/or the normal software application area is still intact, then the microcontroller may restart from the normal software application area. If it is detected that the trigger device is activated, and/or the normal software application area has been affected by the cyber-attack, then the microcontroller restarted from the safe mode software application area may not allow normal operation from the normal software application area.

This allows that the activation of the trigger device always resets the microcontroller of the ECU to restart from the safe one-time programmed software application area. That may decide to return control to the normal operation software or to the safe one-time programmed software (secure backup software). Thus, operation from the normal software application area infected by the cyber-attack may be effectively prevented, and the operation may be switched to the secure backup software.

The electrical gate may be configured to be connected to a power line for supplying a power to one or more of the ECUs and TCUs of the vehicle.

The proposed method for cybersecurity and the vehicle system for performing said method may be applied to any type of vehicle, including a passenger vehicle, a commercial vehicle, a truck, a motorcycle, for example. Further, the method and the vehicle system may apply to any ECU or any functionality as per the Original Equipment Manufacturer (OEM) design. Non-limiting examples on the safety critical functionalities of the vehicle that may apply the proposed solution may comprise: Brakes, Speed control, Steering, Speed transmission, and Front lights.

There may be also proposed an assembly comprising the vehicle system as described above for cybersecurity, and other components in the vehicle which are not part of the system but interact with the system. The other components may comprise, but not limited to, one or more ECUs, one or more TCUs, associated sensors and actuators, and a front panel, for example.

Examples are now discussed with reference to the figures.

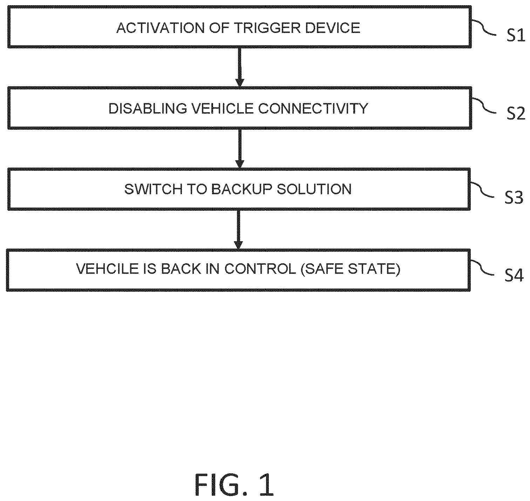

FIG. 1 illustrates a flowchart of an example of the method. In the illustrated exemplary scenario, it is assumed that a hacker has succeeded to access to the internal vehicle network, and has succeeded to do fault injection into a vehicle ECU which takes control of the driving function or any other critical function of the vehicle, for example a braking system control ECU of the vehicle which controls the braking system. Namely, the braking system is hijacked by the hacker. The driver activates the trigger device once he/she notices the attack, for example by pressing the trigger device configured as an emergency button (S1). Once activated, the electrical gate coupled by wire to the trigger device disables the vehicle connectivity to outside of the vehicle (S2). It ensures removing the link with the attacker. Then the electrical gate switches the operational network affected by the cyber-attack to a safe backup solution (for example, backup network) (S3).

As described below, the safe backup network is always supported by a factory safe one-time programmed software in all the examples. Namely, the safe backup network does not allow any further modification or software, thus reliably prevents any further cyber-attack to try to bring fault injection into the vehicle. In addition to removing the link with hackers by disabling the connectivity, switching to the safe one-time programmed backup network ensures that the vehicle is kept away from further risks.

After the infected operational network is switched to the safe backup network, the driver takes back control of the vehicle and may drive safely to the maintenance area or the service station for fully restoring or recovering the vehicle functions, without further risk of being cyber-attacked (S4).

In FIG. 1, activation of the trigger device may cause both disabling the vehicle connectivity (S2) and switching the operational network (S3) in one-step. In such a one-step control, switching the operational network may be effected substantially simultaneously with, or subsequently to disabling the connectivity.

Alternatively, activation of the trigger device may cause disabling the vehicle connectivity and switching the operational network in two-steps. "Two-steps" may mean that the driver needs to activate the trigger device twice, first to disable the connectivity, and second to switch the operational network. The trigger device may comprise a button, a switch, or a lever for example, each configured to be activated in two states. Alternatively, the trigger device may comprise two separate trigger devices, the first one to be activated for disabling the connectivity, and the second one to be activated for switching the operational network. The second trigger device for switching the operational network may be configured for being activated only after the first trigger device for disabling the connectivity has been activated.

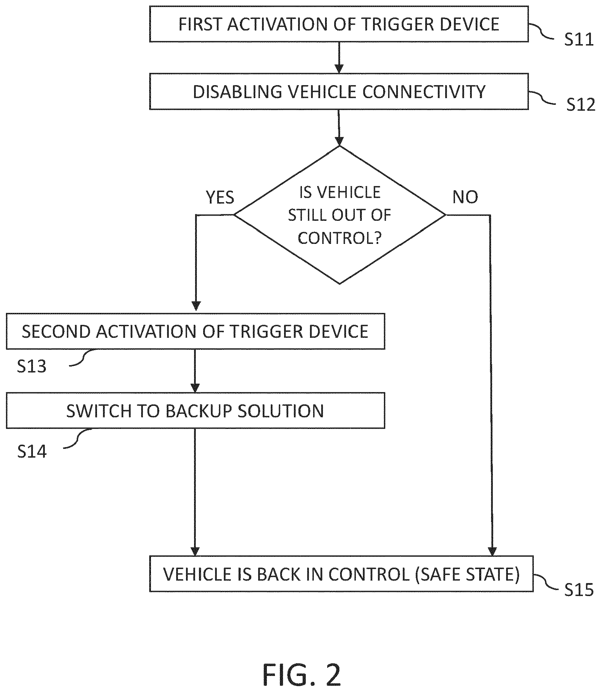

Such two-steps operation is further illustrated in a flowchart of FIG. 2. In the flowchart of FIG. 2, The driver first activates the trigger device to disable the vehicle connectivity (S11). If the vehicle is still out of control even after disabling the vehicle connectivity (S12), then the driver takes the second step to activate the trigger device to switch the operational network to the backup solution (for example, backup network) (S13). After the second activation step (S13), the operational network is switched to the backup solution (S14).

After the infected operational network is switched to the safe backup solution (S14), the driver takes back control of the vehicle and may drive safely to the maintenance area or the service station for fully restoring or recovering the vehicle functions, without further risk of being cyber-attacked (S15).

Now several possible examples of the vehicle system for performing the cybersecurity method as explained above referring to FIG.s 1 and 2 are illustrated with reference to FIG.s 3-5. In the following examples, it is assumed that a cyber-attack has succeeded to do fault injection in a braking system of a vehicle, as similar to the above example scenarios. However, it is also envisaged that the cyber-attack has affected one or more any other driving or critical functions of the vehicle, and that the proposed method and system for the cyber resiliency may be applied equally in those cases as well, namely for taking back control of the one or more affected functions of the vehicle on the driver's initiative. Specifically, different implementations of switching the operational network to the backup network are illustrated in the following examples.

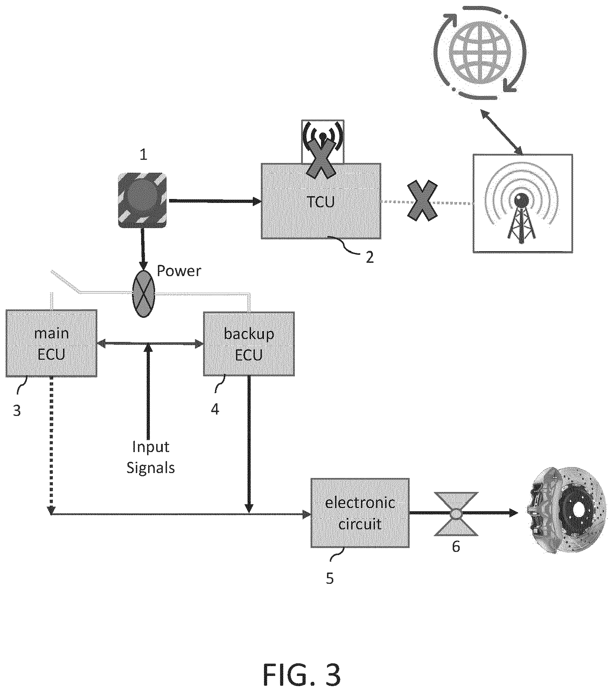

FIG. 3 illustrates an overview of a vehicle system for performing the cybersecurity method. In this example, a vehicle comprises a trigger device (1), a TCU (2), a main ("regular") ECU (3), and a backup ("secure") ECU (4). The main ECU (3) is connected to an electronic circuit (5) to control a braking system (6) of the vehicle. The backup ECU (4) pre-programmed with a one-time programmable software is also connected to the electronic circuit (5). Once the trigger device (1) is activated by a driver, an electrical gate (not shown in the Figure) coupled by wire to the trigger device cuts the link with the TCU (2) to disable the vehicle connectivity. Then the electrical gate further deactivates the main ECU which is infected by the cyber-attack, for example by cutting off the power, and activates the replacement backup ECU (4), for example by connecting the power on. Now the backup ECU (4) with the one-time programmed software thereon takes control of the braking system, and the driver takes full control of the braking system again.

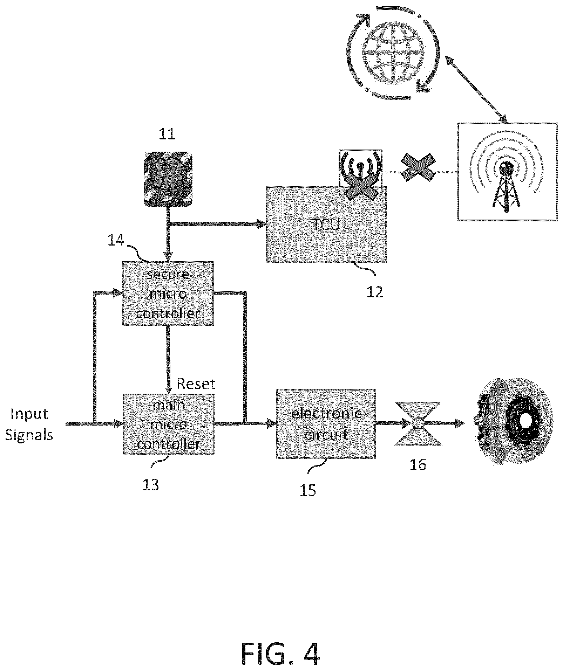

FIG. 4 illustrates an overview of another example of the vehicle system for performing the cybersecurity method. Similar to the above example, the vehicle comprises a trigger device (11) and a TCU (12). In this example, the vehicle comprises an ECU which is connected to an electronic circuit (15) for controlling a braking system (16). The ECU comprises a main microcontroller (13) for normal operation, and a secure microcontroller (14) for safe mode operation. The software on the secure microcontroller (14) is one-time programmed, thus the secure microcontroller (14) is protected against further cyber-attacks. Once the trigger device (11) is activated by a driver, an electrical gate (not shown in the Figure) coupled by wire to the trigger device cuts the link with the TCU (12) to disable the vehicle connectivity. Then the electrical gate further activates the secure microcontroller (14). The activated secure microcontroller (14) forces the main microcontroller (13) which is infected by the cyber-attack in a permanent hardware reset state, for example through a reset signal. Thus, the secure microcontroller (14) takes control of the electronic circuit (15) and the driver now takes full control of the braking system again.

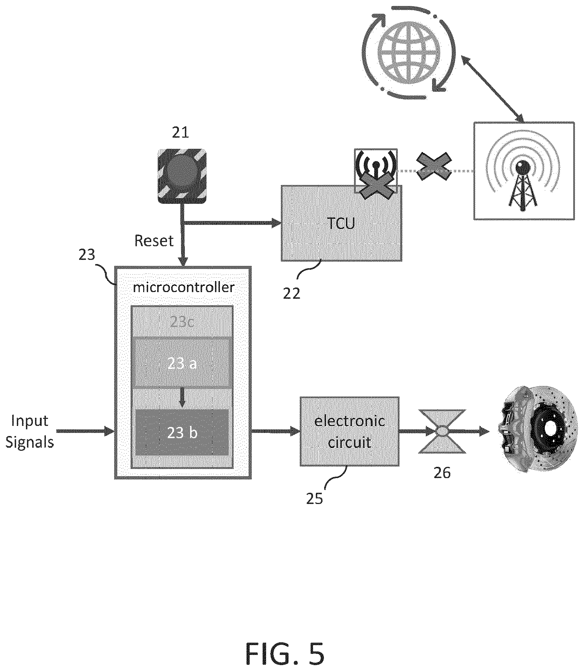

FIG. 5 illustrates an overview of another example of the vehicle system for performing the cybersecurity method. Similar to the above examples, the vehicle comprises the trigger device (21) and the TCU (22). In this example, the vehicle comprises an ECU with one microcontroller (23). The ECU is connected to an electronic circuit (25) for controlling a braking system (26). The microcontroller (23) comprises a normal software application memory area (23b) for normal operation and a safe mode software application memory area (23a) for safe mode operation in a microcontroller application memory (23c). The safe mode software application memory area (23a) is designed as one-time programmed. Once the trigger device (21) is activated by a driver, an electrical gate (not shown in the Figure) coupled by wire to the trigger device cuts the link with the TCU (22) to disable the vehicle connectivity. Then the electrical gate further resets the microcontroller (23) to its initial state. The reset microcontroller restarts from the one-time programmed safe mode software application memory area which runs a failsafe software. The failsafe software may perform a check whether the trigger device is activated. If it detects the trigger device not being activated, the microcontroller (23) may operate from the normal software application memory area (23b) for normal operation. Additionally or alternatively, the failsafe software may perform a check whether the normal software application memory area (23b) is intact. Whenever the failsafe software detects the trigger device being activated and/or the normal software application area being infected, it will not allow the normal software application memory area to handle control as in a normal operation. In this way, the microcontroller (23) of the ECU safely operates from the one-time programmed failsafe software to control the braking system, and the driver takes full control of the braking system again.

Both the cybersecurity method with one-step activation and the cybersecurity method with two-steps activation as explained above with reference to FIG. 1 and FIG. 2, respectively may be implemented in all the examples illustrated in FIG.s 3-5. Specifically, in all the examples of FIG.s 3-5, the vehicle may comprise two trigger devices. Alternatively, the vehicle may comprise one trigger device which is configured to be activated twice. For example in the example of FIG. 4, the trigger device (11) may comprise the first trigger device and the second trigger device. The driver first activates the first trigger device once he/she realizes the cyber-attack on the vehicle. Then the electrical gate (not shown in the Figure) coupled by wire to the trigger device cuts the link with a TCU (12) for disabling the vehicle connectivity. If the driver still cannot retrieve back control of the vehicle, then he/she activates the second trigger device. Activation of the second trigger device causes the electrical gate to activate the secure microcontroller (14) to take control of the braking system, as explained in the above example of FIG. 4. Namely, the activated secure microcontroller (14) forces a main microcontroller (14) which is infected by the cyber-attack in a permanent hardware reset state. The software on the secure microcontroller (14) is one-time programmed, thus the secure microcontroller (14) is protected against further cyber-attacks. In this way, in a few milliseconds the driver takes control of the braking system again.

## Claims

1. A method for cybersecurity response by a driver of a vehicle, the vehicle comprising a trigger device (1) accessible to the driver and coupled by wire to an electrical gate in the vehicle, the method comprising:
upon a cyberattack on the vehicle, activating the trigger device by the driver, thereby disabling by the electrical gate, vehicle connectivity to outside of the vehicle.

2. The method according to claim 1, wherein the vehicle has one or more connectivity interfaces for establishing the vehicle connectivity to outside of the vehicle and disabling the vehicle connectivity comprises shutting down the one or more connectivity interfaces in the vehicle.

3. The method according to claim 2, wherein the one or more connectivity interfaces for establishing the vehicle connectivity to outside of the vehicle comprise a Telematics Control Unit (TCU) (2) and/or a TCU connectivity interface and/or an antenna which interface the outside of the vehicle, and disabling the vehicle connectivity comprises cutting off power to the TCU and/or the TCU connectivity interface and/or the antenna.

4. The method according to any one of claims 1 to 3, wherein the vehicle has an operational network, the cyberattack affects the operation network, and the method further comprises switching, by the electrical gate, the operational network to a backup network of the vehicle, upon activation of the trigger device.

5. The method according to claim 4, wherein the trigger device is activated once to disable the vehicle connectivity and to switch the operational network.

6. The method according to claim 4, wherein the trigger device is activated twice, first to disable the vehicle connectivity and then to switch the operational network.

7. The method according to claim 6, wherein the trigger device comprises:
a first button configured to be activated to disable the vehicle connectivity, and
a second button configured to be activated to switch the operational network.

8. The method according to any one of claims 4 to 7, wherein the vehicle comprises one or more main Electronic Control Units (ECUs) (3) each for a vehicle control function and one or more backup ECUs (4) each corresponding to the one or more main ECUs, and the cyberattack affects the one or more main ECUs,
wherein switching the operational network comprises disabling power to the one or more main ECUs and enabling power to the corresponding one or more backup ECUs.

9. The method according to any one of claims 4 to 7, wherein the vehicle comprises at least one ECU including a first microcontroller (13) for normal operation and a second microcontroller (14) for safe mode operation, the second microcontroller being connected to the trigger device,
wherein switching the operational network comprises putting, by the second microcontroller, the first microcontroller into a permanent hardware reset mode.

10. The method according to any one of claims 4 to 7, wherein the vehicle comprises at least one ECU including a microcontroller (23), the microcontroller comprising a safe mode software application and a normal software application,
wherein switching the operational network comprises:
sending by the electric gate a safe mode activation signal to the microcontroller upon activation of the trigger device; and
switching by the microcontroller from the normal software application to the safe mode software application upon receiving the safe mode activation signal.

11. The method according to any one of claims 1 to 10, wherein the electrical gate is connected to a power line and supplies power to one or more of the ECUs and TCUs of the vehicle.

12. A vehicle system for cybersecurity response by a driver of a vehicle, the system being configured for performing the method according to any one of claims 1 to 11, the system comprising the trigger device (1) and the electrical gate, the trigger device being configured to be coupled by wire to the electrical gate.

13. The vehicle system according to claim 12, further comprising one or more backup ECUs (4) which are one time programmed, configured to take control of one or more operational functions of the vehicle upon activation of the trigger device.

14. The vehicle system according to claim 12 or 13, wherein the trigger device comprises:
a first button (31a) configured to be activated to disable the vehicle connectivity, and
a second button (31b) configured to be activated to switch an operational network of the vehicle which is affected by the cyberattack to a backup network of the vehicle.

15. The vehicle system according to any one of claims 12 to 14, wherein the trigger device is configured to be installed in a front panel of the vehicle, and/or the system further comprises a shield configured to cover the trigger device.
